# EUROPEAN PATENT APPLICATION

(11) **EP 2 540 493 A1**
(43) Date of publication of application: **02.01.2013**
(21) Application number: 11747401.5
(22) Date of filing: 23.02.2011
(51) Int. Cl.: B32B 9/00, B32B 27/00, B32B 27/36, C08J 7/04

(54) **BIAXIALLY ORIENTED POLYESTER FILM AND RELEASE FILM COMPRISING SAME**

(30) Priority: 23.02.2010 JP 2010036972
(71) Applicant: Mitsubishi Plastics, Inc., Tokyo 100-8252 (JP)
(72) Inventor: KUNUGIHARA, Kazuhiro, Maibara-shi Shiga 521-0234 (JP)
(74) Representative: TER MEER - STEINMEISTER & PARTNER GbR
(86) International application number: PCT/JP2011/054016
(87) International publication number: WO 2011/105441

(57) **Abstract**

The present invention provides a biaxially oriented polyester film which is facilitated in detection of defects thereon when being subjected to optical inspection and can be minimized in amount of oligomers deposited on a surface thereof, and can be suitably used not only for production of constituting members of various displays, for instance, production of constituting members of liquid crystal displays such as a polarizing plate and a retardation plate, production of PDP constituting members, and production of organic EL constituting members, but also in various optical applications, as well as a release film. The biaxially oriented polyester film comprises a polyester film having a main orientation axis which extends in a direction having an angle of not more than 11°, and a film haze value of 10 to 25%, and a coating layer comprising a silane compound which is formed on at least one surface of the polyester film, in which an amount of an oligomer deposited on a surface of the coating layer when heating the film at 180°C for 5 min is not more than 3.0 mg/m²; and the release film comprises the biaxially oriented polyester film, and a release layer formed on the coating layer of the biaxially oriented polyester film, the release film having a peel force of 10 to 100 mN/cm.

## Description

### TECHNICAL FIELD

The present invention relates to a release film comprising a polyester film which is excellent in adaptability to various optical inspections and can be minimized in amount of oligomers deposited on a surface thereof, and a release layer formed on the polyester film, and more particularly relates to a release film which can be suitably used not only for production of constituting members of various displays, for instance, production of constituting members in liquid crystal displays (hereinafter occasionally referred to merely as "LCD") such as a polarizing plate and a retardation plate, production of constituting members of plasma display panels (hereinafter occasionally referred to merely as "PDP"), and production of constituting members of organic electroluminescent displays (hereinafter occasionally referred to merely as "organic EL"), but also in various optical applications.

### BACKGROUND ART

Hitherto, release films comprising a polyester film as a base material have been used for production of various display constituting members such as production of constituting members of liquid crystal displays such as a polarizing plate and a retardation plate, production of PDP constituting members, and production of organic EL constituting members, and in various optical applications. As the problems encountered upon use of these release films, there are known various defects owing to oligomers deposited on a surface of a release layer thereof which tends to occur upon production of the release films.

In recent years, with the rapid progress of IT (Information Technology) application fields, various defects owing to deposition of oligomers on release films used for production of display members such as LCD, PDP and organic EL have become noticeable as the release films are improved in quality thereof.

In order to attain a high adaptability of the release films in the above-mentioned various applications, it has been required that the release films are not only excellent in releasing property, but also minimized in amount of foreign matters deposited on a surface of the release films. That is, this is because in these applications of the release films, since a viewing capability owing to a high light transmittance, i.e., a good visibility, is especially important, even foreign matters on a surface of the release films which have no problems in ordinary applications tend to cause severe problems.

For example, in the process of producing a polarizing plate for liquid crystal displays which includes the steps of laminating a release film and a polarizing plate through an adhesive layer and winding up the resulting laminate into a roll, etc., it is considered that oligomers tend to be deposited on the release film via a drying step after applying an adhesive thereonto. The oligomers deposited on a surface of the release layer is transferred to a surface of an adhesive layer of a counterpart member to be adhered to the release layer. Therefore, when laminating the polarizing plate having such an adhesive layer adhered with the oligomers onto a glass plate to produce LCD, the resulting LCD tends to suffer from defects such as deteriorated brightness.

In recent years, for the purpose of enhancing a visibility of LCD, there is such a tendency that the brightness on a surface of an image screen of LCD is increased. As a result, the above defects tend to raise still severer problems.

On the other hand, for the purpose of reducing production costs with the increase in productivity, in particular, there is such a tendency that a drying temperature used in a drying step is set to a much higher value as the speed of the production process is increased. As a result, deposition of the above oligomers tends to occur more frequently, resulting in contamination of rolls and therefore occurrence of difficulty in producing LCD.

In the inspection steps for optical evaluation of display performance, hue, contrast and inclusion of foreign matters of a polarizing plate for liquid crystal displays, there is taken such a measure that defective products are rejected by visual observation or use of a magnifying glass. However, when using the release film deposited with crystallized oligomers, a polarizing plate with such a release film tends to be rejected as a defective product owing to inclusion of foreign matters therein, so that there tends to occur such a problem that the yield of the product tends to be deteriorated.

In addition to the above problem of foreign matters, the constituting members for liquid crystal displays, etc., have been usually inspected at appropriate times for evaluating a display performance, a hue, a contrast or the like thereof. However, release films using the conventional biaxially oriented polyester film as a base material have an anisotropy which may cause difficulty in conducting an inspection for optical evaluation thereof. For this reason, in general, a surface protective film is once released and removed prior to the inspection, and another new surface protective film is attached once again after completion of the inspection. The reason for attaching the new surface protective film is that even though the previous surface protective film is still reusable, if such a film is attached again, a beauty of the product thus inspected tends to be damaged.

Upon conducting the above inspection, two steps are needed for the release and re-attachment of the surface protective films, thereby raising a large demerit in these applications in which extreme reduction in costs is required.

As the method of solving the above problems, there has been proposed the method in which the direction of a main orientation axis of a biaxially oriented polyester film is controlled to be substantially the same as the direction of an orientation axis of a polarizing plate or a retardation plate, or the biaxially oriented polyester film is laminated on the polarizing plate or the retardation plate at an angle of 90°C relative thereto. However, in the method using the biaxially oriented polyester film, there tends to still arise the problem of poor yield owing to difficulty in strictly controlling the direction of the main orientation axis.

### Prior Documents

### Patent Documents

Patent Document 1: Japanese Patent Application Laid-Open (KOKAI) No. 6-16941
Patent Document 2: Japanese Patent Application Laid-Open (KOKAI) No. 7-3215
Patent Document 3: Japanese Patent Application Laid-Open (KOKAI) No. 2000-44904
Patent Document 4: Japanese Patent Application Laid-Open (KOKAI) No. 2000-238441
Patent Document 5: Japanese Patent Application Laid-Open (KOKAI) No. 7-101026
Patent Document 6: Japanese Patent Application Laid-Open (KOKAI) No. 2001-335649
Patent Document 7: Japanese Patent Application Laid-Open (KOKAI) No. 2001-62960

### SUMMARY OF THE INVENTION

### Problems to be Solved by the Invention

The present invention has been accomplished to solve the above conventional problems. An object of the present invention is to provide a biaxially oriented polyester film which is facilitated in detection of defects thereon when being subjected to optical inspection and can be minimized in amount of oligomers deposited on a surface thereof, and can be suitably used not only for production of constituting members of various displays, for instance, production of LCD constituting members of liquid crystal displays such as a polarizing plate and a retardation plate, production of PDP constituting members, and production of organic EL constituting members, but also in various optical applications, as well as a release film using the biaxially oriented polyester film.

### Means for Solving Problems

As a result of the present inventors' earnest study in view of the above problems, it has been found that the above problems can be readily solved by using a film having a specific structure. The present invention has been attained on the basis of this finding.

That is, in a first aspect of the present invention, there is provided a biaxially oriented polyester film comprising
a polyester film having a main orientation axis which extends in a direction having an angle of not more than 11°, and a film haze value of 10 to 25%, and
a coating layer comprising a silane compound which is formed on at least one surface of the polyester film,
an amount of an oligomer deposited on a surface of the coating layer when heating the film at 180°C for 5 min being not more than 3.0 mg/m².
Also, in a second aspect of the present invention, there is provided a release film which comprises the biaxially oriented polyester film as defined in the first aspect and a release layer formed on the coating layer of the biaxially oriented polyester film, and which has a peel force of 10 to 100 mN/cm.

### EFFECT OF THE INVENTION

According to the present invention, there are provided a biaxially oriented polyester film which is facilitated in detection of defects thereon when being subjected to optical inspection and can be minimized in amount of oligomers deposited on a surface thereof, and can be suitably used not only for production of constituting members of various displays, for instance, production of constituting members of liquid crystal displays such as a polarizing plate and a retardation plate, production of PDP constituting members, and production of organic EL constituting members, but also in various optical applications, as well as a release film. Therefore, the present invention has a high industrial value.

The present invention id described in detail below.
Typical examples of the polyester used in the present invention include polyethylene terephthalate comprising an ethylene terephthalate unit in an amount of not less than 80 mol% based on whole constituting units thereof, polyethylene-2,6-naphthalate comprising an ethylene-2,6-naphthalate unit in an amount of not less than 80 mol% based on whole constituting units thereof, and poly-1,4-cyclohexanedimethylene terephthalate comprising a 1,4-cyclohexanedimethylene terephthalate unit in an amount of not less than 80 mol% based on whole constituting units thereof. Examples of the other polyesters include polyethylene isophthalate and poly-1,4-butylene terephthalate.

Examples of comonomer components other than the above preferential constituting units include diol components such as propylene glycol, 1,3-butylene glycol, 2,3-butylene glycol, neopentyl glycol, trimethylene glycol, tetramethylene glycol, hexamethylene glycol, diethylene glycol, triethylene glycol, polyethylene glycol, polytetramethylene glycol and polyalkylene glycols; dicarboxylic acid components such as isophthalic acid, 2,7-naphthalene dicarboxylic acid, 5-sodium sulfoisophthalic acid, oxalic acid, malonic acid, succinic acid, adipic acid, azelaic acid, sebacic acid and diphenyl ether dicarboxylic acid; and ester-forming derivatives such as oxymonocarboxylic acids.

Also, the polyester may be in the form of a homopolymer or a copolymer, and further in the form of a blended mixture comprising a small amount of the other resin. Examples of the other resin blended with the polyethylene terephthalate include various copolymerized polyethylene terephthalates such as isophthalic acid copolymers, cyclohexane dimethylene terephthalate copolymers and polyethylene glycol copolymers, polyethylene naphthalate and copolymerized polyethylene naphthalates, and polybutylene terephthalate.

The intrinsic viscosity of the polyester used in the present invention is in the range of usually 0.40 to 0.90, preferably 0.45 to 0.80 and more preferably 0.50 to 0.70. When the intrinsic viscosity of the polyester is less than 0.40, the resulting film tends to be deteriorated in mechanical strength. When the intrinsic viscosity of the polyester is more than 0.90, there tend to arise the problems such as excessively high melt viscosity, high load applied to an extruder and high product costs.

In order to reduce an amount of oligomers in films, there has been conventionally used the method of previously subjecting a polymer to solid state polymerization to reduce an amount of oligomers therein and forming the thus obtained polymer into a film as a final product having a less content of the oligomers. However, in the solid state polymerization, there tends to arise such a problem that the resulting polymer has a high intrinsic viscosity, or the number of steps for production of the film tends to be increased which results in increase in production costs. Further, in the case where the melting temperature in an extruder used upon production of the film is high or the residence time therein is prolonged, the effect of reducing an amount of oligomers in the film tends to be lost.

As the preferred method of imparting an easy-slipping property to the polyester film and simultaneously well controlling a film haze value thereof, there may be used the method of blending particles in the polyester film. When varying a kind, a particle diameter and a content of the inert particles to be blended in the polyester film, it is possible to well control the film haze value thereof.

Examples of the inert particles incorporated in the polyester film include particles of silica, calcium carbonate, magnesium carbonate, barium carbonate, calcium sulfate, calcium phosphate, magnesium phosphate, kaolin, aluminum oxide, titanium oxide, etc. In addition, there may also be used heat-resistant organic particles as described in Japanese Patent Publication (KOKOKU) No. 59-5216, Japanese Patent Application Laid-Open (KOKAI) No. 59-217755 or the like. Examples of the other heat-resistant organic particles include particles of thermosetting urea resins, thermosetting phenol resins, thermosetting epoxy resins, benzoguanamine resins, etc.

Further, there may also be used deposited particles obtained by precipitating and finely dispersing a part of metal compounds such as a catalyst during the process for production of the film raw material.

On the other hand, the shape of the particles used in the polyester layer is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The average particle diameter of the particles used in the polyester layer is usually in the range of 0.1 to 5 µm and preferably 0.2 to 3 *µ*m. When the average particle diameter of the particles is less than 0.1 µm, the particles tend to be aggregated together and therefore fail to exhibit a sufficient dispersibility therein, or may fail to increase a film haze value of the resulting film.

On the other hand, when the average particle diameter of the particles is more than 5 µm, the obtained film tends to have an excessively coarse surface roughness, so that problems or defects tend to occur upon forming various surface functional layers on the polyester layer in the subsequent steps.

The content of the particles in the polyester layer is usually in the range of 0.05 to 5% by weight and preferably 0.003 to 3% by weight. When the content of the particles in the polyester layer is less than 0.05% by weight, the resulting film tends to be insufficient in easy-slip property, or the film haze value of the film tends to hardly increased. On the other hand, when the content of the particles in the polyester layer is more than 5% by weight, the resulting film tends to exhibit an excessively high film haze value.

The method of adding the particles to the polyester is not particularly limited, and any conventionally known methods can be suitably used therefor. For example, the particles may be added at any optional stages in the polymerization process for production of the polymer.

In addition, there may also be used the method of blending a slurry of the particles prepared by dispersing the particles in ethylene glycol or water with the raw polyester material using a vented kneading extruder, the method of blending the dried particles with the raw polyester material using a kneading extruder, or the like.

Meanwhile, the polyester film used in the present invention may also comprise, in addition to the above particles, conventionally known additives such as an antioxidant, an antistatic agent, a thermal stabilizer, a lubricant, a dye, a pigment, etc., if required.

The polyester film used in the present invention is provided on at least one surface thereof with a coating layer comprising a silane compound. The amount of oligomers deposited on a surface of the coating layer after being subjected to heat treatment at 180°C for 10 min is not more than 3.0 mg/m², preferably not more than 2.8 mg/m², more preferably not more than 1.60 mg/m², and especially preferably not more than 1.00 mg/m². When the amount of oligomers deposited on a surface of the coating layer is more than 3.0 mg/m², the oligomers deposited on the surface of the coating layer tend to form foreign matters upon heating during the step for production of a release film or an adhesive layer.

For the purpose of achieving the above object, in the present invention, the coating layer comprising the silane compound agent is provided on the surface of the polyester film which is to be prevented from suffering from deposition of the oligomers. When no coating layer comprising the silane compound is formed on the surface of the polyester film, a large amount of the oligomers tend to be deposited on the surface owing to the heat treatment, so that rolls used for transporting the film in the film production step tend to be contaminated with the oligomers, or the deposited oligomers tend to form undesired foreign matters.

The coating layer comprising the silane compound may be formed, for example, by using a silane coupling agent. The silane coupling agent used herein means a compound having two kinds of functional groups which are different in reactivity from each other, in a molecule thereof, and generally represented by the formula: YRSiX₃.

In the above formula, Y represents an organic functional group such as a vinyl group, an epoxy group and an amino group; R represents an alkylene group such as a methylene group, an ethylene group and a propylene group; X represents a hydrolyzable group such as a methoxy group and an ethoxy group, or an alkyl group. In the present invention, there is preferably used the silane coupling agent of the above formula in which Y is an amino group. The silane coupling agents of the above formula in which Y is a vinyl group or an epoxy group tend to have a less effect of sealing the oligomers.

Specific examples of the silane compound include N-β(aminoethyl) γ-aminopropyl trimethoxysilane, N-β(aminoethyl) γ-aminopropyl triethoxysilane and N-β(aminoethyl) γ-aminopropylmethyl dimethoxysilane.

As the preferred silane coupling agent used in the present invention, there may be mentioned those compounds represented by the following general formula.

Y-(CH₂)₃-Si-(X)₃

(wherein X represents -OCH₃ or -OCH₂CH₃; and Y represents -NH₂ or -NHCH₂CH₂NH₂.)
As the more preferred silane coupling agent used in the present invention, there may be mentioned those compounds represented by the following general formula.

Z-(CH₂)₃-Si-(X)₃

(wherein X represents -OCH₃ or -OCH₂CH₃; and Z represents - NHCH₂CH₂NH₂.)
The oligomer deposition preventive layer comprising the silane compound according to the present invention may comprise a water-soluble or water-dispersible binder resin other than the above silane coupling agent, if required. Examples of the binder resin include polyvinyl alcohol, polyesters, polyurethanes, acrylic resins, vinyl resins, epoxy resins and amide resins. The skeletal structure of these resins may have substantially a composite structure by be subjecting the resins to copolymerization, etc. Examples of the binder resin having a composite structure include acrylic resin-grafted polyesters, acrylic resin-grafted polyurethanes, vinyl resin-grafted polyesters and vinyl resin-grafted polyurethanes.

For the purpose of preventing deposition of oligomers on the surface of the film as a main object of the present invention, among these binder resins, polyvinyl alcohol is preferably used.

The binder component is preferably compounded in an amount of not more than 50 parts by weight and more preferably not more than 30 parts by weight based on the weight of the coating layer.

The coating layer of the film according to the present invention may further comprise a crosslinking reactive compound, if required.

The crosslinking reactive compound may be selected from polyfunctional low-molecular compound and high-molecular compounds such as methylolated or alkylolated urea-based, melamine-based, guanamine-based, acrylamide-based and polyamide-based compounds, polyamines, epoxy compounds, oxazoline compounds, aziridine compounds, blocked isocyanate compounds, silane coupling agents, titanium coupling agents, zircoaluminate-based coupling agents, metal chelates, organic acid anhydrides, organic peroxides, heat-reactive or photoreactive vinyl compounds and photosensitive resins.

The crosslinking reactive compound undergoes crosslinking reaction mainly with a functional group of the resin contained in the coating layer to thereby improve an agglomerating property, a surface hardness, a mar resistance, a solvent resistance and a water resistance of the coating layer. For example, in the case where the functional group of the resin contained in the coating layer is a hydroxyl group, as the crosslinking reactive compound, there are preferably used melamine-based compounds, blocked isocyanate compounds, organic acid anhydrides or the like. Also, in the case where the functional group of the resin contained in the coating layer is an organic acid group or an organic acid anhydride group, as the crosslinking reactive compound, there are preferably used epoxy-based compounds, melamine-based compounds, oxazoline-based compounds, metal chelates or the like. In addition, in the case where the functional group of the resin contained in the coating layer is an amine group, as the crosslinking reactive compound, there are preferably used epoxy-based compounds or the like. Thus, the crosslinking reactive compound used is preferably selected from those compounds having a higher efficiency of crosslinking reaction with the functional group of the resin contained in the coating layer.

The crosslinking reactive compound may be in the form of either a low-molecular weight compound or a reactive functional group-containing polymer as long as the compound comprises two or more reactive functional groups in a molecule thereof.

The crosslinking reactive compound may be compounded in the coating layer in an amount of not more than 50 parts by weight, preferably not more than 30 parts by weight and especially preferably not more than 15 parts by weight based on the weight of the coating layer.

Further, the coating layer used in the present invention may also comprise inert particles, if required, in order to improve a slipping property of the coating layer.

The thickness of the coating layer is preferably in the range of 0.01 to 2 µm, more preferably 0.03 to 0.5 *µ*m, and especially preferably 0.06 to 0.2 *µ*m. When the thickness of the coating layer is less than 0.01 *µ*m, it is not possible to attain a sufficient effect of preventing deposition of oligomers thereon. When the thickness of the coating layer is more than 2 *µ*m, there is such a tendency that the resulting film is insufficient in anti-blocking property.

The biaxially oriented polyester film used as a base material of the film according to the present invention preferably has a main orientation axis which is inclined at an angle of not more than 11° and more preferably not more than 9°. Meanwhile, the direction of the main orientation axis as used herein is usually referred to as an "orientation angle" and means inclination of the main axis relative to a width direction or a longitudinal direction of the film. In the release film using the biaxially oriented polyester film having a main orientation axis which is inclined at an angle of more than 11°, severe leakage of light tends to occur when subjected to Cross-Nicol inspection, so that detection of defects such as foreign matters and flaws in the film tends to be severely damaged.

The direction of the main orientation axis of the biaxially oriented polyester film may be controlled by varying the temperature and stretch ratio of longitudinal stretching, the temperature and stretch ratio of lateral stretching, and the conditions of relaxing treatment or the like.

In the present invention, in order to further facilitate detection of defects such as foreign matters or flaws on a polarizing plate, the polyester film preferably has a film haze value of 10 to 25% and preferably 14 to 21%. When the film haze value of the polyester film is less than 10%, an amount of scattered light when light is transmitted through the polyester film is small, and therefore a good inspection property is attained. However, if any flaws are present on the surface of the polyester film upon the inspection, the flaws tend to be noticed to excessively large extent, so that it may be difficult to conduct an accurate inspection of defects on the test specimen itself. On the other hand, when the film haze value of the polyester film is more than 25%, an amount of scattered light on the surface of the polyester film tends to be increased, so that it may be difficult to detect defects to be inspected on the film.

The polyester film used in the present invention preferably has a two or more-layered structure.

The particles compounded in an intermediate layer serves for controlling a film haze value of the polyester film, whereas the particles compounded in the surface layers serves for controlling surface properties of the polyester film.

Thus, in the present invention, the film haze value of the polyester film is controlled by the particles compounded therein. However, in the case where the film haze value of the polyester film having a single-layered structure is increased by the method of compounding a large amount of particles thereto, etc., the polyester film tends to exhibit an excessively large surface roughness on opposite surfaces thereof.

If the polyester film having such a large surface roughness is used as a release film, when attaching the release film onto an adhesive material of a polarizing plate, air bubbles tend to be entrapped therebetween owing to adverse influence of protrusions on the surface of the film, or the surface shape of the release film tends to be transferred to the surface of the adhesive material, so that air bubbles tend to be formed upon laminating the polarizing plate on a panel.

The thickness of the polyester film used in the present invention is usually in the range of 10 to 100 *µ*m, preferably 20 to 75 *µ*m and more preferably 20 to 50 *µ*m. When the thickness of the polyester film is out of the above-specified range, the resulting film tends to be deteriorated in handling property or the production costs thereof tend to be increased.

Next, an example of the process of producing the polyester film used in the present invention is more specifically explained, although not particularly limited thereto.

That is, in the production process, there is preferably used such a method in which the above-mentioned raw polyester material is extruded from a die in the form of a molten sheet, and the molten sheet is cooled and solidified on a cooling roll to obtain an unstretched sheet. In this case, in order to enhance a flatness of the obtained sheet, it is necessary to enhance adhesion between the sheet and the rotary cooling drum. For this purpose, an electrostatic adhesion method and/or a liquid coating adhesion method are preferably used. Next, the thus obtained unstretched sheet is biaxially stretched. In such a case, the unstretched sheet is first stretched in one direction thereof using a roll-type or tenter-type stretching machine. The stretching temperature is usually 70 to 120°C and preferably 80 to 110°C, and the stretch ratio is usually 2.5 to 7 times and preferably 3.0 to 6 times.

Next, the thus stretched sheet is stretched in the direction perpendicular to the stretching direction of the first stage. In this case, the stretching temperature is usually 70 to 170°C, and the stretch ratio is usually 3.0 to 7 times and preferably 3.5 to 6 times. Successively, the resulting biaxially stretched sheet is heat-treated at a temperature of 180 to 270°C under a tension or relaxation within 30% to obtain a biaxially oriented film.

Upon the above stretching steps, there may also be used the method in which the stretching in each direction is carried out in two or more stages. In such a case, the multi-stage stretching is preferably performed such that the stretch ratio in each of the two directions is finally fallen within the above-specified range.

Also, upon producing the polyester film constituting the release film according to the present invention, there may also be used a simultaneous biaxial stretching method. The simultaneous biaxial stretching method is such a method in which the above unstretched sheet is stretched and oriented in both of the machine and width directions at the same time while maintaining the sheet in a suitable temperature-controlled condition at a temperature of usually 70 to 120°C and preferably 80 to 110°C. The stretch ratio used in the simultaneous biaxial stretching method is 4 to 50 times, preferably 7 to 35 times and more preferably 10 to 25 times in terms of an area ratio of the sheet to be stretched. Successively, the obtained biaxially stretched sheet is heat-treated at a temperature of 170 to 250°C under a tension or relaxation within 30% to obtain a stretched oriented film. As the apparatus used in the above simultaneous biaxial stretching method, there may be employed those stretching apparatuses of any conventionally known type such as a screw type stretching apparatus, a pantograph type stretching apparatus and a linear drive type stretching apparatus.

The method of forming the coating layer on the surface of the polyester film is not particularly limited. However, there may be suitably adopted the method of applying a coating solution during the step of producing the polyester film. More specifically, there may be mentioned the method in which the coating solution is applied on the surface of the unstretched sheet and then dried, the method in which the coating solution is applied on the surface of the monoaxially stretched sheet and then dried, and the method in which the coating solution is applied on the surface of the biaxially stretched sheet and then dried. Among these methods, in view of economy, there is preferably used the method in which after applying the coating solution onto the surface of the unstretched or monoaxially stretched film, the coating layer is dried and cured simultaneously with the step of subjecting the film to heat treatment.

In addition, the coating layer may be formed by combination of some of the above-mentioned methods. More specifically, there may be mentioned the method in which the first layer is applied on the surface of the unstretched sheet and dried, and thereafter the resulting sheet is stretched in one axial direction thereof, and further the second layer is applied thereonto and dried.

As the method of applying the coating solution on the surface of the polyester film, there may be used conventionally known coating methods as described in Yuji HARAZAKI, "Coating Methods", Maki-shoten, 1979, such as those methods using a reverse roll coater, a gravure coater, a rod coater, an air doctor blade coater, etc.

The coating solution used in the present invention is preferably prepared by using water as main medium usually from the standpoint of safety or hygiene. The coating solution may also comprise a small amount of an organic solvent for the purpose of improving a dispersibility in water or a film-forming property as far as the coating solution is prepared using water as a main medium. The organic solvent is preferably used in an amount capable of being dissolved in water when used in the form of a mixture with water as the main medium. However, the organic solvent may also be undissolved in water upon use as long as the organic solvent is present in the form of a stable emulsion which is free from separation into individual layers even when allowed to stand for a long period of time. The organic solvent may be used singly, or in combination of any two or more kinds thereof, if required.

The release layer formed on the coating layer in the present invention is not particularly limited as long as the release layer comprises a material having a releasing property. Among the above materials, those materials comprising a curable silicone resin are preferably used because of a good releasing property thereof. The materials may comprise the curable silicone resin as a main component, or may be in the form of a modified silicon resin prepared by subjecting the curable silicone resin to graft polymerization with organic resins such as urethane resins, epoxy resins and alkyd resins, etc.

The kinds of curable silicone resins may include any curing reaction types such as addition-type, condensation-type, ultraviolet-curing type, electron bean-curing type and solvent-free type, or the like.

Specific examples of the curable silicone resins include "KS-774", "KS-775" "KS-778", "KS-779H", "KS-847H", "KS-856", "X-62-2422" and "X-62-2461" all produced by Shin-Etsu Chemical Co., Ltd.; "DKQ3-202", "DKQ3-203", "DKQ3-204", "DKQ3-205" and "DKQ3-210" all produced by Dow Corning Asia Ltd.; "YSR-3022", "TPR-6700", "TPR-6720" and "TPR-6721" all produced Toshiba Silicone Co., Ltd.; and "SD7220", "SD7226" and "SD7229" all produced by Dow Corning Toray Co., Ltd. Further, in the release layer, a peel controlling agent may be used in combination with the above silicone resins in order to control a peeling property, etc., of the release layer. In addition, as described above, the silane compound having an amino group may be added to the release layer.

In the present invention, as the method of forming the release layer on the polyester film, there may be used conventionally known coating methods such as a reverse roll coating method, a gravure coating method, a bar coating method and a doctor blade coating method.

In the present invention, the coating amount of the release layer is usually in the range of 0.01 to 1 g/m².

In the present invention, on the surface of the release film on which no release layer is formed, there may be provided a coating layer such as an adhesive layer, an antistatic layer and an oligomer deposition preventive layer, and further the polyester film may be subjected to surface treatment such as corona treatment and plasma treatment.

The peel force of the release film according to the present invention is in the range of 10 to 100 mN/cm and preferably 10 to 50 mN/cm. When the peel force of the release film is less than 10 mN/cm, the release film tends to be simply peeled even when no peeling is required, owing to the excessively low peel force. On the other hand, when the peel force of the release film is more than 100 mN/cm, the adhesive material tends to suffer from deformation upon peeling owing to the excessively high peel force, resulting in occurrence of problems in subsequent steps or adhesion of the adhesive material to the release film side.

Further, the coating films such as the adhesive layer and the release layer may be subjected to drying and/or curing (such as heat-curing and ionizing radiation-curing) either separately or simultaneously. When subjecting the adhesive layer and the release layer to drying and/or curing simultaneously, the simultaneous procedure is preferably conducted at a temperature of not lower than 80°C. The drying and curing are preferably conducted at a temperature of not lower than 80°C for a time period of not shorter than 10 sec. When the drying temperature is lower than 80°C or the curing time is shorter than 10 sec, the curing of the coating films tends to be insufficient, so that the resulting coating layers tend to be fallen off from the film.

### EXAMPLES

The present invention is described in more detail below by Examples. However, these Examples are only illustrative and not intended to limit the present invention thereto, and various changes or modifications are possible and intended to fall within the scope of the present invention unless they depart from the subject matters thereof. Various properties described in the following Examples and Comparative Examples were measured and evaluated by the following methods.

### (1) Measurement of intrinsic viscosity of polyester:

One gram of a polyester was accurately weighed, and mixed with and dissolved in 100 mL of a mixed solvent comprising phenol and tetrachloroethane at a weight ratio of 50/50, and a viscosity of the resulting solution was measured at 30°C.

### (2) Average particle size (d50):

Using a centrifugal precipitation type particle size distribution measuring apparatus "SA-CP3 Model" manufactured by Shimadzu Seisakusho Corp., the particle size corresponding to a cumulative volume fraction of 50% in equivalent spherical distribution of the particles was measured as an average particle size d50.

### (3) Measurement of direction of main orientation axis (orientation angle) :

Using a polarization microscope manufactured by Carl Zeiss Inc., orientation of the polyester film was observed to measure an inclination angle of the direction of an in-plane main orientation axis of the polyester film relative to the width direction of the polyester film as an orientation angle of the film. This measurement was carried out at three points of the film, i.e., a central portion and both end portions thereof. Among the values measured at the three points, the maximum value was regarded as a maximum orientation angle.

### (4) Film haze:

The turbidity of the film was measured using an integrating sphere turbidity meter "NDH-20D" manufactured by Nippon Denshoku Kogyo Co., Ltd., according to JIS K6714.

### (5) Heat treatment of film:

A Kent paper of A4 size and a polyester film to be heat-treated were overlapped together. At this time, the Kent paper and the polyester film were clipped at four corners thereof with gem clips such that the coating layer of the polyester film faced outside. The polyester film thus clipped with the Kent paper was allowed to stand in an oven at 180°C in a nitrogen atmosphere for 10 min to thereby subject the polyester film to heat treatment.

### (6) Amount of oligomers on surface of film after heat treatment:

The polyester film obtained after the heat treatment was folded into an open-topped rectangular box having a bottom area of 250 cm². The polyester film having a coating layer was folded such that the coating layer faced inside. Next, 10 mL of DMF were charged in the thus formed box and allowed to stand therein for 3 min, and then recovered. The thus recovered DMF was fed to a liquid chromatograph "LC-7A" manufactured by Shimadzu Seisakusho Corp., to measure an amount of oligomers contained in DMF. The thus measured amount of oligomers was divided by an area of the film contacted with DMF to calculate an amount (mg/m²) of oligomers on the surface of the film. The amount of oligomers in DMF was determined from a peak area ratio between a peak area of a control sample and a peak area of a sample to be measured (absolute calibration method).

The control sample was prepared by accurately weighing a previously sampled oligomer (cyclic trimer) and dissolving the oligomer in DMF accurately weighed. The concentration of the control sample is preferably in the range of 0.001 to 0.01 mg/mL. The conditions of the liquid chromatograph used were as follows.
Mobile phase A: Acetonitrile
Mobile phase B: 2% Acetic acid aqueous solution
Column: "MCI GEL ODS 1HU" manufactured by Mitsubishi Chemical Corp.
Column temperature: 40°C
Flow rate: 1 mL/min
Detection wavelength: 254 nm

### (7) Evaluation of peel force (F) of release film:

After attaching a double-coated adhesive tape ("No. 502" produced by Nitto Denko Co., Ltd.) onto a surface of a release layer of a sample film, the resulting laminated film was cut into a size of 50 mm x 300 mm and allowed to stand at room temperature for 1 hr, and then subjected to measurement of a peel force thereof. The peel force of the film was measured using a tensile tester "INTESCO MODEL 2001 TYPE" manufactured by Intesco Co., Ltd., by subjecting the film to 180° peel test at a stress rate of 300 mm/min.

### (8) Practical properties upon use:

### <Visual inspection property under Cross-Nicol >

The film coated with a release agent was dried at a dryer temperature of 120°C and taken up at a line speed of 30 m/min to obtain a release film. The thus obtained release film was adhered to a polarizing film through an adhesive such that the width direction of the release film was parallel with an orientation axis of the polarizing film to thereby form a polarizing plate. On the release film adhered to the polarizing film, another polarizing plate for inspection was overlapped such that the width direction of the release film was perpendicular to an orientation axis of the polarizing plate for inspection. White light was irradiated from the side of the former polarizing plate and visually observed on the side of the polarizing plate for inspection, and the visual inspection property under Cross-Nicol was evaluated according to the below-mentioned ratings. Meanwhile, upon the measurement, the samples of A4 size were cut from three portions of the resulting film, i.e., a central portion and both end portions of the film along the width direction thereof, and the thus cut three samples were evaluated.

### [Evaluation criteria]

A: Inspection was possible without light interference.
B: Inspection was still possible although light interference occurred.
C: Inspection was no longer possible with severe light interference.
The ratings of A and B were regarded as being acceptable without practical problems upon use.

### <Releasing property>

The condition of the laminated film having an adhesive layer when peeling the release film therefrom was observed to evaluate a releasing property thereof according to the following ratings.
A: The release film was smoothly peeled off without any adhesion of the adhesive to the release layer.
B: The release film was peeled off, but when peeled at a high stress rate, adhesion of the adhesive to the release layer occurred.
C: Significant adhesion of the adhesive to the release film occurred.

### <Condition of contamination of rolls>

Upon producing the laminated film having an adhesive layer, respective rolls of a production apparatus used were visually observed to evaluate the condition of contamination of the rolls owing to deposition of oligomers thereon.
A: No deposited materials were present on the surface of the rolls after production of the film.
B: Deposited materials were present in a slight amount on the surface of the rolls after production of the film, but no problems concerning the production occurred.
C: Deposited materials were present on the surface of the rolls after production of the film, and it was necessary to clean the roll.

### <Production of polyester (A)>

100 parts by weight of dimethyl terephthalate and 60 parts by weight of ethylene glycol as starting materials were charged together with magnesium acetate tetrahydrate as a catalyst into a reactor, and the reaction therebetween was initiated at 150°C. The reaction temperature was gradually raised while distilling off methanol produced, and allowed to reach 230°C after 3 hr. After 4 hr, the transesterification reaction was substantially terminated. The obtained reaction mixture was mixed with ethyl acid phosphate and then transferred to a polycondensation reaction vessel. Further, the reaction mixture thus transferred was mixed with 0.04 part of antimony trioxide, followed by subjecting the mixture to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, an agitation power in the reaction vessel was monitored, and the reaction was terminated at the time at which a viscosity of the reaction solution reached the value corresponding to an intrinsic viscosity of 0.63, which was determined by the change in agitation power in the reaction vessel. The resulting polymer was discharged under application of a nitrogen pressure from the reaction vessel, thereby obtaining chips of a polyester (A). As a result, it was confirmed that the thus obtained polyester (A) had an intrinsic viscosity of 0.63.

### <Production of polyester (B)>

The same procedure as defined in the above production of the polyester (A) was conducted except that after adding ethyl acid phosphate, an ethylene glycol slurry of synthetic calcium carbonate particles having an average particle diameter of 0.8 *µ*m was added to the resulting mixture such that the content of the synthetic calcium carbonate particles based on the polyester was 1% by weight, thereby obtaining a polyester (B). As a result, it was confirmed that the thus obtained polyester (B) had an intrinsic viscosity of 0.63.

### <Production of polyester (C)>

The same procedure as defined in the above production of the polyester (B) was conducted except that the particles added were replaced with synthetic calcium carbonate particles having an average particle diameter of 1.5 *µ*m such that the content of the synthetic calcium carbonate particles based on the polyester was 1% by weight, thereby obtaining a polyester (C). As a result, it was confirmed that the thus obtained polyester (C) had an intrinsic viscosity of 0.63.

The compounds for preparation of the coating solution used in the following Examples and Comparative Examples were as follows.

### •Examples of compounds for preparation of the coating solution:

### Silane coupling agent (A):

As the silane coupling agent (A), there was used N-β(aminoethyl) γ-aminopropyl trimethoxysilane, and pure water was used as a diluent for controlling a concentration of the coating solution upon preparation of the coating solution.

### Silane coupling agent (B):

As the silane coupling agent (B), there was used N-β(aminoethyl) γ-aminopropyl triethoxysilane, and pure water was used as a diluent for controlling a concentration of the coating solution upon preparation of the coating solution.

### Silane coupling agent (C):

As the silane coupling agent (C), there was used γ-aminopropyl trimethoxysilane, and pure water was used as a diluent for controlling a concentration of the coating solution upon preparation of the coating solution.

### Silane coupling agent (D) :

As the silane coupling agent (D), there was used N-phenyl-y-aminopropyl trimethoxysilane, and pure water was used as a diluent for controlling a concentration of the coating solution upon preparation of the coating solution.

### Silane coupling agent (E):

As the silane coupling agent (E), there was used γ-glycidoxypropyl triethoxysilane, and a 2% acetic acid aqueous solution was used as a diluent for controlling a concentration of the coating solution upon preparation of the coating solution since the above compound was hardly dissolved in pure water.

### PVA-based resin:

Polyvinyl alcohol having a saponification degree of 88 mol% and a polymerization degree of 500.

### Preparation of coating solution-A:

A coating solution comprising 90% by weight of the silane coupling agent (A) and 10% by weight of the PVA-based resin was prepared. The solid content of the coating solution was adjusted to 2% by weight.

### Coating agents-B to E:

The same procedure as used for preparation of the coating solution-A was conducted except that the composition of the coating solution was changed as shown below, thereby obtaining coating solutions-B to F.

### <Compositions of respective coating solutions>

Coating solution-A: Silane coupling agent (A)/PVA-based resin = 90/10
Coating solution-B: Silane coupling agent (B)/PVA-based resin = 90/10
Coating solution-C: Silane coupling agent (C)/PVA-based resin = 90/10
Coating solution-D: Silane coupling agent (D)/PVA-based resin = 90/10
Coating solution-E: Silane coupling agent (E)/PVA-based resin = 90/10

### Preparation of coating solution-F:

A coating solution comprising 80 parts of a polyurethane water dispersion A "HYDRAN AP-40" produced by DIC Corp., and 20 parts of a polyester water dispersion B "FINETEX ES-670" produced by DIC Corp., was prepared. The solid content of the coating solution was adjusted to 2% by weight.

### Polyester film-1:

A mixed raw material obtained by mixing 70% by weight of the polyester (A) and 30% by weight of the polyester (B) as an raw material for an intermediate layer, and a mixed raw material obtained by mixing 84% by weight of the polyester (A) and 16% by weight of the polyester (B) as an raw material for surface layers, were respectively charged into two extruders, and melted therein and extruded at 290°C therefrom, and then cooled and solidified on a cooling roll whose surface was controlled to a temperature of 40°C, by an electrostatic adhesion method, thereby obtaining an unstretched sheet. Next, the thus obtained unstretched sheet was stretched at 100°C at a stretch ratio of 2.8 times in a longitudinal direction thereof, and then the coating solution-A was applied onto the surface of the thus coated longitudinally stretched film. The thus longitudinally stretched film was introduced into a tenter where the film was preheated and then stretched at 120°C at a stretch ratio of 5.1 times in a lateral direction thereof. Then, the obtained stretched sheet was heat-treated at 220°C for 10 sec, and then relaxed by 4% in a width direction thereof at 180°C, thereby obtaining a master roll having a width of 4000 mm. The thus obtained master roll was slit at the position spaced 1400 mm from the end of the master roll, and the master roll having a length of 1000 m was taken up on a core, thereby obtaining a polyester film-1. As a result, it was confirmed that the thus obtained polyester film had a total thickness of 38 *µ*m, and the thicknesses of the respective layers therein were 4 *µ*m, 30 *µ*m and 4 *µ*m.

### Polyester film-2:

The same procedure as used for production of the polyester film-1 was conducted except that the composition of the raw materials compounded were changed to the raw material composition-2 as shown in Table 1, and the coating solution (A) was changed to the coating solution (B), thereby obtaining a polyester film-2.

### Polyester film-3:

The same procedure as used for production of the polyester film-1 was conducted except that the composition of the raw materials compounded were changed to the raw material composition-3 as shown in Table 1, thereby obtaining a polyester film-3 to 5.

### Polyester film-4:

The same procedure as used for production of the polyester film-1 was conducted except that the composition of the raw materials compounded were changed to the raw material composition-4 as shown in Table 1, thereby obtaining a polyester film-3 to 5.

### Polyester film-5:

The same procedure as used for production of the polyester film-1 was conducted except that the coating solution (A) was changed to the coating solution (C), thereby obtaining a polyester film-5.

### Polyester film-6:

The same procedure as used for production of the polyester film-1 was conducted except that the coating solution (A) was changed to the coating solution (D), thereby obtaining a polyester film-6.

### Polyester film-7:

The same procedure as used for production of the polyester film-1 was conducted except that the stretch ratio in the longitudinal direction was changed to 2.9 times, thereby obtaining a polyester film-8.

### Polyester film-8:

The same procedure as used for production of the polyester film-1 was conducted except that the stretch ratios in the longitudinal and width directions were changed to 3.4 times and 4.2 times, respectively, thereby obtaining a polyester film-9.

### Polyester film-9:

The same procedure as used for production of the polyester film-1 was conducted except that the coating solution (A) was changed to the coating solution (E), thereby obtaining a polyester film-9.

### Polyester film-10:

The same procedure as used for production of the polyester film-1 was conducted except that no coating was conducted after the longitudinal stretching, thereby obtaining a polyester film-10.

### Polyester film-11:

The same procedure as used for production of the polyester film-1 was conducted except that the coating solution (A) was changed to the coating solution (F), thereby obtaining a polyester film-11.

### Polyester film-12:

The same procedure as used for production of the polyester film-1 was conducted except that the composition of the raw materials compounded were changed to the raw material composition-5 as shown in Table 1, thereby obtaining a polyester film-12.

### Polyester film-13:

The same procedure as used for production of the polyester film-1 was conducted except that the composition of the raw materials compounded were changed to the raw material composition-6 as shown in Table 1, thereby obtaining a polyester film-13.

**Table 1**

| Raw material composition No. | Composition of raw materials for intermediate layer | Composition of raw materials for surface layers |
|---|---|---|
| 1 | (A)/(B) = 84/16 | (A)/(B) = 70/30 |
| 2 | (A)/(C) = 90/10 | (A)/(C) = 75/25 |
| 3 | (A)/(C) = 95/5 | (A)/(C) = 75/25 |
| 4 | (A)/(B) = 76/24 | (A)/(B) = 70/30 |
| 5 | (A)/(B) = 95/5 | (A)/(B) = 70/30 |
| 6 | (A)/(C) = 75/25 | (A)/(C) = 75/25 |

### Example 1:

A release agent having the following release agent composition-A was applied onto the polyester film-1 by a reverse gravure coating method such that the coating amount of the release agent (after dried) was 0.1 g/m², dried at a dryer temperature of 120°C and taken up at a line speed of 30 m/min, thereby obtaining a roll-shaped release film.

### •Release agent composition-A

| | |
|---|---|
| Curable silicone resin ("KS-847H" produced by Shin-Etsu Chemical Co., Ltd.) | 100 parts |
| Curing agent ("PL-50T" produced by Shin-Etsu Chemical Co., Ltd.) | 1 part |
| MEK/toluene mixed solvent (mixing ratio: 1:1) | 1500 parts |

### Example 2:

The same procedure as in Example 1 was conducted except that the polyester film-1 was changed to the polyester film-2, thereby obtaining a release film.

### Example 3:

The same procedure as in Example 1 was conducted except that the polyester film-1 was changed to the polyester film-3, thereby obtaining a release film.

### Example 4:

The same procedure as in Example 1 was conducted except that the polyester film-1 was changed to the polyester film-2, thereby obtaining a release film.

### Example 5:

The same procedure as in Example 1 was conducted except that the polyester film-1 was changed to the polyester film-5, thereby obtaining a release film.

### Example 6:

The same procedure as in Example 1 was conducted except that the polyester film-1 was changed to the polyester film-6, thereby obtaining a release film.

### Example 7:

The same procedure as in Example 1 was conducted except that the polyester film-1 was changed to the polyester film-7, thereby obtaining a release film.

### Example 8:

The same procedure as in Example 1 was conducted except that the release agent composition-A was changed to the following release agent composition-B, thereby obtaining a release film.

### •Release agent composition-B

| | |
|---|---|
| Curable silicone resin ("KS-774" produced by Shin-Etsu Chemical Co., Ltd.) | 100 parts |
| Curing agent ("PL-4" produced by Shin-Etsu Chemical Co., Ltd.) | 10 parts |
| MEK/toluene mixed solvent (mixing ratio: 1:1) | 1500 parts |

### Example 9:

The same procedure as in Example 1 was conducted except that the release agent composition-A was changed to the following release agent composition-C, thereby obtaining a release film.

### •Release agent composition-C

| | |
|---|---|
| Curable silicone resin ("KS-723A" produced by Shin-Etsu Chemical Co., Ltd.) | 100 parts |
| Curable silicone resin ("KS-723B" produced by Shin-Etsu Chemical Co., Ltd.) | 5 parts |
| Curing agent ("PS-3" produced by Shin-Etsu Chemical Co., Ltd.) | 5 parts |
| MEK/toluene mixed solvent (mixing ratio: 1:1) | 1500 parts |

### Example 10:

The same procedure as in Example 1 was conducted except that the polyester film-1 was changed to the polyester film-9, thereby obtaining a release film.

### Comparative Example 1:

The same procedure as in Example 1 was conducted except that the polyester film-1 was changed to the polyester film-8, thereby obtaining a release film.

### Comparative Example 2:

The same procedure as in Example 1 was conducted except that the polyester film-1 was changed to the polyester film-10, thereby obtaining a release film.

### Comparative Example 3:

The same procedure as in Example 1 was conducted except that the polyester film-1 was changed to the polyester film-11, thereby obtaining a release film.

### Comparative Example 4:

The same procedure as in Example 1 was conducted except that the polyester film-1 was changed to the polyester film-12, thereby obtaining a release film.

### Comparative Example 5:

The same procedure as in Example 1 was conducted except that the polyester film-1 was changed to the polyester film-13, thereby obtaining a release film.

### <Production of polarizing plate with release film>

The following acrylic adhesive was applied onto a polarizing plate such that a thickness of a coating layer obtained after drying the acrylic adhesive applied was 25 *µ*m. The thus coated polarizing plate was passed through a drying oven at 130°C for 30 sec, and then a release film was laminated thereon to thereby prepare the polarizing plate with the release film in which the release film was adhered to the polarizing film through the adhesive.
The lamination of these films was conducted such that the width direction of the release film was parallel with an orientation axis of the polarizing film.

### •Acrylic adhesive coating solution

| | |
|---|---|
| Acrylic adhesive ("ORIBAIN BPS429-4" produced by Toyo Ink Co., Ltd.) | 100 parts |
| Curing agent ("BPS8515" produced by Toyo Ink Co., Ltd.) | 3 parts |
| MEK/toluene mixed solvent (mixing ratio: 1:1) | 50 parts |

The evaluation results of the films obtained in the respective Examples and Comparative Examples are collectively shown in the following Tables 2 to 4.

**Table 2**

| | Examples | | | | |
|---|---|---|---|---|---|
| | 1 | 2 | 3 | 4 | 5 |
| Orientation angle (°) | 8 | 8 | 8 | 8 | 8 |
| Film haze (%) | 18 | 16 | 11 | 22 | 18 |
| OL amount on surface after heat treatment (mg/m²) | 0.2 | 0.36 | 0.2 | 0.2 | 1.36 |
| Peel force (mN/cm) | 20 | 20 | 20 | 20 | 20 |
| Visual observation property | A | A | B | B | A |
| Releasing property | A | A | A | A | A |
| Condition of contamination of rolls | A | A | A | A | B |

**Table 3**

| | Examples | | | | |
|---|---|---|---|---|---|
| | 6 | 7 | 8 | 9 | 10 |
| Orientation angle (°) | 8 | 10 | 8 | 8 | 8 |
| Film haze (%) | 18 | 18 | 18 | 18 | 18 |
| OL amount on surface after heat treatment (mg/m²) | 2.48 | 0.2 | 0.2 | 0.2 | 3.0 |
| Peel force (mN/cm) | 20 | 20 | 60 | 600 | 20 |
| Visual observation property | B | B | A | A | A |
| Releasing property | A | A | B | C | A |
| Condition of contamination of rolls | B | A | A | A | B |

**Table 4**

| | Comparative Examples | | | | |
|---|---|---|---|---|---|
| | 1 | 2 | 3 | 4 | 5 |
| Orientation angle (°) | 50 | 8 | 8 | 8 | 8 |
| Film haze (%) | 18 | 18 | 18 | 8 | 26 |
| OL amount on surface after heat treatment (mg/m²) | 0.2 | 6.64 | 7.66 | 0.2 | 0.2 |
| Peel force (mN/cm) | 20 | 20 | 20 | 20 | 20 |
| Visual observation property | C | C | C | C | C |
| Releasing property | A | A | A | A | A |
| Condition of contamination of rolls | A | C | C | A | A |

### INDUSTRIAL APPLICABILITY

The biaxially oriented polyester film and the release film produced using the biaxially oriented polyester film according to the present invention can be suitably used, for example, as a release film for a polarizing plate in liquid crystal displays.

## Claims

1. A biaxially oriented polyester film comprising
a polyester film having a main orientation axis which extends in a direction having an angle of not more than 11°, and a film haze value of 10 to 25%, and
a coating layer comprising a silane compound which is formed on at least one surface of the polyester film,
an amount of an oligomer deposited on a surface of the coating layer when heating the film at 180°C for 5 min being not more than 3.0 mg/m².

2. A biaxially oriented polyester film according to claim 1, wherein the silane compound has an amino group.

3. A release film which comprises the biaxially oriented polyester film as defined in claim 1 and a release layer formed on the coating layer of the biaxially oriented polyester film, and which has a peel force of 10 to 100 mN/cm.
